# EUROPÄISCHE PATENTSCHRIFT

(11) **EP 0 574 837 B1**
(45) Veröffentlichungstag und Bekanntmachung des Hinweises auf die Patenterteilung: **15.05.1996**
(21) Anmeldenummer: 93109342.1
(22) Anmeldetag: 11.06.1993
(51) Int. Cl.: H01J 9/44, H04N 17/04

(54) **Verfahren und Vorrichtung zur Konvergenzmessung bei einer Farbbildröhre**
Method and device for measuring electron beam convergence in a colour cathode ray tube
Procédé et dispositif pour déterminer le convergence du faisceau d'électron d'un tube à rayons cathodique

(30) Priorität: 16.06.1992 DE 4219641
(43) Veröffentlichungstag der Anmeldung: 22.12.1993
(73) Patentinhaber: NOKIA TECHNOLOGY GmbH, D-75175 Pforzheim (DE)
(72) Erfinder: Hassler, Joachim, D-7300 Esslingen (DE); Sernhorst, Zeljko, D-3100 Celle (DE); Wessels, Günter, Dr., D-2805 Stuhr 4 (DE)

(56) Entgegenhaltungen:
- EP-A- 0 087 652
- EP-A- 0 442 685

## Beschreibung

### Technisches Gebiet

Das Folgende betrifft ein Verfahren und eine Vorrichtung zum Messen der Lage eines Elektronenstrahls einer Mehrstrahl-Farbbildröhre relativ zum Gesichtsfeld eines Bildwandlers.

In der Praxis werden derartige Verfahren und Vorrichtungen dazu verwendet, Konvergenzfehler und Rasterversätze in vertikaler Richtung festzustellen. Bei der Konvergenzmessung werden die Lagen von Rasterlinien ausgemessen, wie sie von mindestens zwei Elektronenstrahlen erzeugt werden. Die Abweichung zwischen den Lagen gibt den Konvergenzfehler an. Beim Rasterversatz in vertikaler Richtung wird untersucht, wie weit eine horizontale Rasterlinie in vertikaler Richtung von der horizontalen Mittellinie einer Farbbildröhre abweicht.

### Stand der Technik

Zum Messen von Konvergenz und Rasterlage in vertikaler Richtung ist seit einigen Jahren eine Vorrichtung von der Firma Innovationstechnik Gesellschaft für Automation m.b.H., Bremen, DE, im Handel, wie sie im folgenden anhand der Fig. 7 und 8 veranschaulicht wird. Das Verfahren, das mit dieser Vorrichtung ausgeübt wird, wird anhand der Fig. 9 und 10 erläutert.

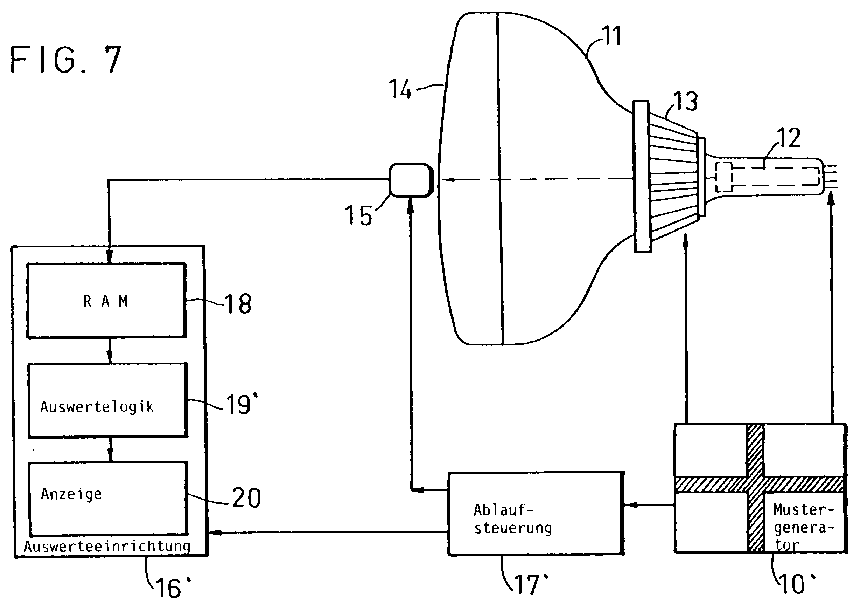

Die bekannte Vorrichtung gemäß Fig. 7 verfügt über einen Mustergenerator 10', der ein im Hals einer Farbbildröhre 11 angeordnetes Elektronenstrahlerzeugungssystem 12 sowie einen Ablenker 13 ansteuert. Das auf dem Bildschirm 14 der Röhre erzeugte Bild wird von einer Bildwandlerkamera 15 aufgenommen und von einer Auswerteeinrichtung 16' ausgewertet. Die zeitlichen Abläufe im Mustergenerator 10', der Bildwandlerkamera 15 und der Auswerteeinrichtung 16' werden von einer Ablaufsteuerung 17' gesteuert. Die Auswerteeinrichtung 16' verfügt über einen RAM 18, eine Auswertelogik 19' und eine Anzeige 20.

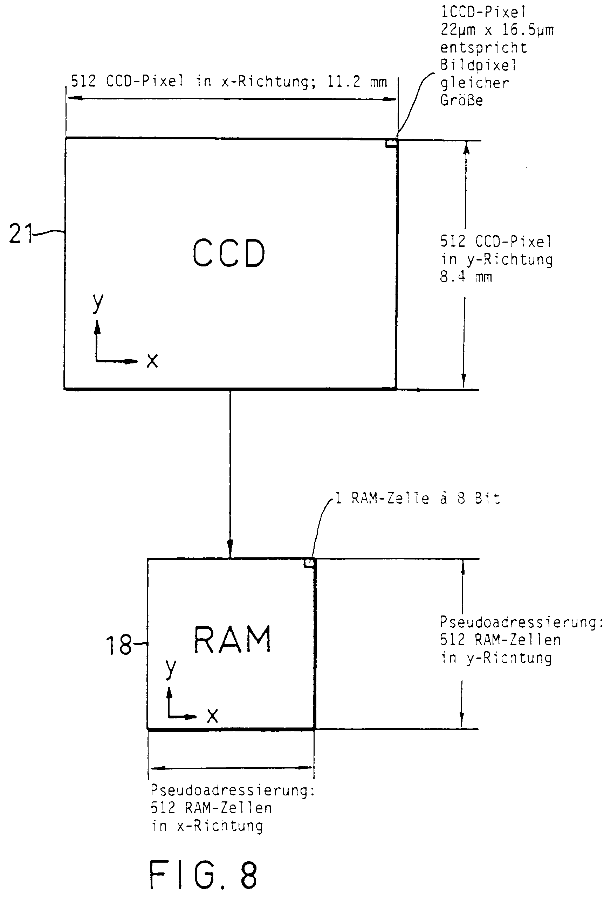

In der Bildwandlerkamera 15 ist ein CCD-Wandler 21 angeordnet, dessen Strukturierung durch Fig. 8 veranschaulicht wird. Unter Steuerung durch die Ablaufsteuerung 17 werden die in den Pixeln des CCD-Wandlers 21 gespeicherten Ladungen ausgelesen, und den Ladungsmengen werden digitale 8-Bit-Werte zugeordnet. Jedem CCD-Pixel entspricht eine RAM-Zelle. Die Pseudoadressierung des RAM 18 ist so, daß die Anordnung der RAM-Zellen der Anordnung der CCD-Pixel entspricht. Daraus ist unmittelbar ersichtlich, daß das im RAM gespeicherte Informationsmuster unmittelbar dem zuvor im CCD gespeicherten Ladungsmuster und damit dem auf dem Bildschirm 14 erzeugten Helligkeitsverteilungsmuster entspricht. Der RAM weist eine Kapazität von 10¹⁸ Zellen a 8 Bit gleich 256 kByte auf.

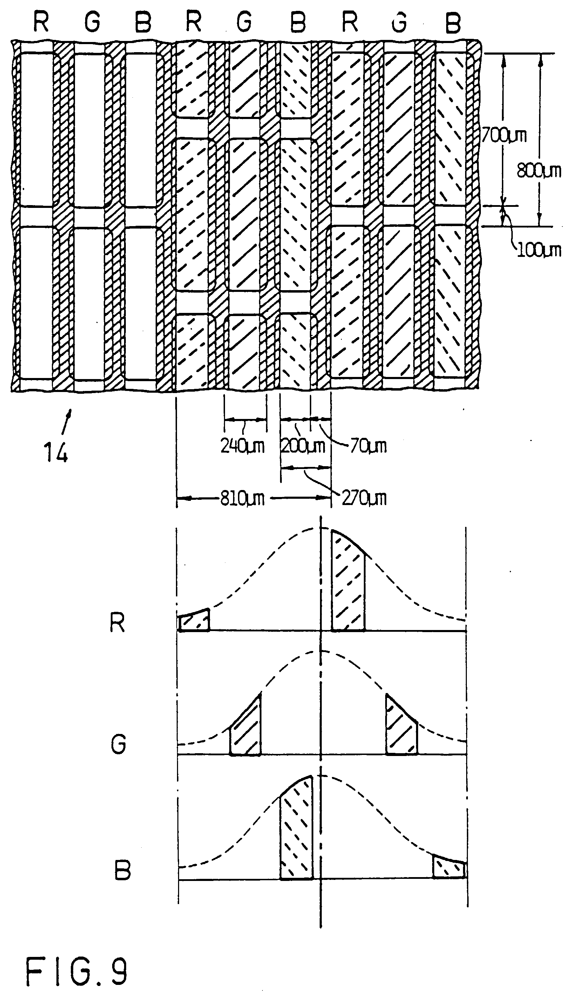

Das vom Mustergenerator 10' erzeugte Muster ist ein übliches Gitterraster, das aus einer horizontalen und einer vertikalen Linie für jede der drei Farben einer Farbbildröhre besteht. Fig. 9 veranschaulicht, wie die vertikale Linie auf dem Leuchtschirm 14 erscheint.

Der Leuchtschirm 14 besteht aus Leuchtstoffstreifen R, G und B sowie aus zwischen diesen liegenden Matrixstreifen, die in Fig. 9 durch dichte Schraffierung angedeutet sind. Dort, wo Elektronenflecke auf dem Leuchtschirm landen und Leuchtstoffstreifen vorhanden sind, kommt es zu Lumineszenz in der Leuchtfarbe der Leuchtstoffstreifen. Rot leuchtende Gebiete sind in Fig. 9 durch gestrichelte, nach rechts aufsteigende Schraffierung, grün leuchtende Gebiete durch durchgezogene Schraffierung und blau leuchtende Gebiete durch gestrichelte, nach rechts fallende Schraffierung kenntlich gemacht. Jeder Leuchtfleck weist eine Breite von 200 µm und eine Höhe von 700 µm auf. In horizontaler Richtung sind zur gleichen Farbe gehörige Leuchtflecke um 810 µm getrennt, während sie in vertikaler Richtung nur um 100 µm voneinander getrennt sind. Diese Werte gelten für die Mitte eines Leuchtschirms. Zu den Außenrändern hin werden die Leuchtstoffstreifen und die Matrixstreifen breiter. Sind keine Matrixstreifen vorhanden, gelten ähnliche Größenverhältnisse. Die Leuchtstoffstreifen werden dann durch unbeschichtete Streifen voneinander getrennt, und die Elektronenflecke landen innerhalb der Leuchtstoffstreifen.

In der unteren Hälfte von Fig. 9 ist veranschaulicht, welches Bild leuchtfleckbezogen von einer vertikalen Rasterlinie geschaffen wird. Der Strahl rastert den Bildschirm 14 ab, wobei er jeweils an einem bestimmten Ort, genauer gesagt zu einem bestimmten Zeitpunkt nach einem Horizontalsynchronisierimpuls, aufgetastet und dann wieder gesperrt wird. Dadurch nimmt seine Intensität zu und dann wieder ab. Im unteren Teil von Fig. 9 ist der Intensitätsverlauf ab etwa 10 % der Maximalhelligkeit dargestellt. Es ist ersichtlich, daß im Fall von Fig. 9 im Detail gesehen zwei rote vertikale Streifen, zwei grüne vertikale Streifen und zwei blaue vertikale Streifen mit jeweils unterschiedlichen Intensitäten erzeugt werden. Wird der Bildschirm aus einiger Entfernung, z. B. aus 1 m Abstand betrachtet, fallen die einzelnen farbigen Streifen nicht mehr auf, sondern es erscheint ein einzelner weißer Strich. Dies gilt jedoch nur, wenn die Intensitätsverläufe für die drei Strahlen miteinander übereinstimmen, wie dies in Fig. 9 dargestellt ist. Wäre dagegen der Elektronenstrahl, der die roten Leuchtstoffstreifen anregt, im folgenden als roter Elektronenstrahl bezeichnet, nach links gegenüber dem Elektronenstrahl versetzt, der die grünen Leuchtstoffstreifen anregt, im folgenden als grüner Elektronenstrahl bezeichnet, und wäre der Elektronenstrahl, der die blauen Leuchtstoffstreifen anregt, im folgenden als blauer Elektronenstrahl bezeichnet, nach rechts gegenüber dem grünen Elektronenstrahl versetzt, würden drei räumlich voneinander getrennte farbige Rasterstreifen erscheinen, die bei genauerem Hinsehen jeweils aus zwei um 810 µm voneinander getrennten Streifen bestehen. Im Fall von Fig. 9 konvergieren die drei Elektronenstrahlen in horizontaler Richtung, während sie im soeben beschriebenen Fall nicht konvergieren.

Die Vorrichtung gemäß Fig. 7 bestimmt die Lage der Elektronenstrahlen dadurch, daß sie den Helligkeitsschwerpunkt der von einem jeweiligen Elektronenstrahl erzeuten Leuchtfleckgebiete bestimmt. Sie führt ein Verfahren mit folgenden Schritten aus:
- Erzeugen eines vorgegebenen Elektronenverteilungsmusters auf der Schattenmaske;
- Aufnehmen des zugehörigen Helligkeitsverteilungsmusters auf dem Bildschirm mit Hilfe des genannten Bildwandlers, der das Helligkeitsverteilungsmuster in ein elektrisches Ladungsmuster wandelt; und
- Auswerten des Ladungsmusters zum Gewinnen eines Wertes einer die Lage des Ladungsmusters innerhalb des Gesichtsfeldes des Bildwandlers charakterisierenden Größe.

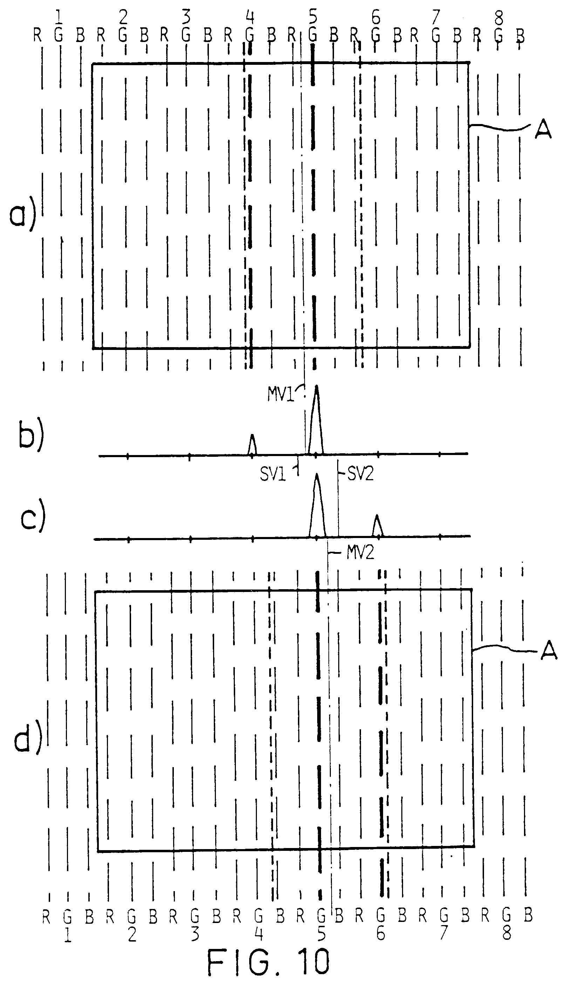

Dieses Verfahren wird durch Fig. 10a, b und c veranschaulicht.

Fig. 10a betrifft den Fall, daß die Rasterbreite eines Elektronenstrahls, innerhalb der er eine Intensität von mindestens 10 % seiner Maximalintensität über diese Breite aufweist, etwas kleiner ist als das Doppelte des Abstandes zwischen zwei benachbarten Leuchtstoffstreifen derselben Farbe. Dabei liegt der dargestellte vertikale Rasterstreifen so, daß ein grüner Leuchtstoffstreifen ziemlich in der Mitte seiner Breite liegt, während ein zweiter Streifen gerade noch am Rand liegt. Diese Streifen sind mit G5 bzw. G4 bezeichnet. Die zugehörigen Leuchtflecke sind als dicke vertikale Striche dargestellt. Mögliche Leuchtflecke, die jedoch gerade nicht zum Leuchten angeregt sind, sind durch dünne vertikale Striche dargestellt.

Fig. 10b zeigt die Helligkeitsverteilung, wie sie mit Hilfe des CCD-Bildwandlers 21 entlang einer horizontalen Linie gemessen wird. Dabei wird über alle Signale über eine vorgegebene Anzahl von Pixeln in vertikaler Richtung aufsummiert. Es ergibt sich relative große Helligkeit im Bereich des Leuchtstoffstreifens G5, dagegen kleinere Helligkeit im Bereich des Leuchtstoffstreifens G4. Der Schwerpunkt der Helligkeitsverteilung ist mit SV1 bezeichnet.

Fig. 10d ist sehr ähnlich zu Fig. 10a, jedoch mit dem Unterschied, daß der genannte Elektronenstrahl etwas nach rechts verschoben ist, nämlich so, daß seine vertikale Mittellinie nun die Lage MV2 statt der Lage MV1 in Fig. 10a einnimmt. Dabei liegt der Leuchtstoffstreifen G4 nicht mehr im genannten Intensitätsbereich, jedoch wird nun der Leuchtstoffstreifen G6 zu erkennbarer Lumineszenz angeregt. Die zugehörige Helligkeitsverteilung, wie sie vom CCD-Bildwandler 21 gemessen wird, ist in Fig. 10c dargestellt. Als Schwerpunkt des Helligkeitsverlaufs ergibt sich der Ort SV2.

Die Verschiebung zwischen den Schwerpunkten SV1 und SV2 ist deutlich größer als die tatsächliche Verschiebung der Mitte des Elektronenstrahls von der Mittellinie MV1 zur Mittellinie MV2. Der gemessene Ort ändert sich trotz geringer Verschiebung sprunghaft relativ stark. Dies, weil der größte Teil der vom Elektronenstrahl geschriebenen vertikalen Rasterlinie gar nicht erfaßt wird, sondern nur diejenigen kleinen Bereiche zu sichtbarer Lumineszenz führen, die tatsächlich einen Leuchtstoffstreifen treffen. Wird in einem Fall gemäß Fig. 10a ein Leuchtstoffstreifen links von einem mittleren Leuchtstoffstreifen gerade noch getroffen, wird aber bei geringfügiger Verschiebung nach rechts dieser linke Streifen nicht mehr getroffen, dafür aber plötzlich ein Streifen rechts vom mittleren Leuchtstoffstreifen, bedeutet dies eine Verschiebung in denjenigen Leuchtanteilen, die zusätzlich von denen vom mittleren Streifen her vorhanden sind, um 1,6 mm.

Das anhand der Fig. 10a und d veranschaulichte anscheinende Springen eines vertikalen Rasterstreifens bei nur geringfügigem Verschieben desselben ist auch dann gut erkennbar, wenn dieser Rasterstreifen nicht mit dem CCD-Wandler 21 aufgenommen wird, sondern mit dem bloßen Auge betrachtet wird. Es ist dann besonders deutlich, wenn der Rasterstreifen schmal ist. Bei breitem Rasterstreifen fällt es dagegen weniger auf, und auch bei der Verteilung des Helligkeitsschwerpunktes wirkt sich das Wegfallen eines leuchtenden Streifens auf der einen Seite und das Auftreten eines neuen leuchtenden Streifens auf der anderen Seite kaum aus, wenn über die Helligkeit des Lichts von vielen leuchtenden Streifen gemittelt wird. Jedoch können dann Verschiebungen nur mit geringer Empfindlichkeit erfaßt werden. Dies führt dazu, daß sowohl beim Einstellen von Konvergenz mit bloßem Auge, wie auch beim Einstellen mit Hilfe eines CCD-Bildwandlers mit der Vorrichtung gemäß Fig. 7 Rasterstreifen von einigen wenigen Millimetern Breite verwendet werden. Diese stellen einen guten Kompromiß zwischen Empfindlichkeit und Störung durch den geschilderten Sprungeffekt dar.

In vertikaler Richtung sind die Fehler, die in ungünstigen Fällen beim Verschieben des Elektronenstrahls auftreten können, weniger kritisch, da in vertikaler Richtung die Leuchtflecke 700 µm hoch, aber nur 100 µm voneinander getrennt sind. Das Verhältnis zwischen leuchtenden und nichtleuchtenden Gebieten beträgt also 7:1, während es in horizontaler Richtung 2:8 beträgt, was einen Unterschied mit dem Faktor 28 in bezug auf den Zusammenhang zwischen gemessenen und tatsächlichen Strahlverschiebungen zuungunsten der Messung in horizontaler Richtung bedeutet. Wegen dieser ungünstigen Verhältnisse in horizontaler Richtung ist die bekannte Vorrichtung nicht dazu in der Lage, horizontale Konvergenzfehler mit ausreichender Genauigkeit zu messen.

Es bestand demgemäß das Problem, eine Vorrichtung und ein Verfahren zum Messen der Lage eines Elektronenstrahls einer Mehrstrahl-Farbbildröhre anzugeben, die die Lage des Elektronenstrahls auch in horizontaler Richtung mit hoher Genauigkeit bestimmen können.

### Darstellung der Erfindung

Das erfindungsgemäße Verfahren weist die oben aufgelisteten Schritte des bekannten Verfahrens auf und ist dadurch gekennzeichnet, daß als Elektronenverteilungsmuster ein solches erzeugt wird, das Abmessungen im Bereich einiger weniger Millimeter hat und bei dem mindestens eine Kante schräg zur Längserstreckungsrichtung der Maskenschlitze steht, und daß das zugehörige Helligkeitsverteilungsmuster so auf den Bildwandler abgebildet wird, daß es ganz in dessen Gesichtsfeld paßt.

Die erfindungsgemäße Vorrichtung weist die Funktionsgruppen der anhand von Fig. 7 beschriebenen Vorrichtung auf und ist dadurch gekennzeichnet, daß
- der Mustergenerator so ausgebildet ist, daß er ein Elektronenverteilungsmuster erzeugt, das Abmessungen im Bereich einiger weniger Millimeter hat und bei dem mindestens eine Kante schräg zur Längserstreckungsrichtung der Maskenschlitze steht; und
- die Bildwandlerkamera so ausgebildet ist, daß sie das Helligkeitsverteilungsmuster so auf den Bildwandler abbildet, daß es ganz in dessen Gesichtsfeld paßt.

Dem erfindungsgemäßen Verfahren liegt die Erkenntnis zugrunde, daß sprunghafte Änderungen im Schwerpunkt der vom CCD-Bildwandler erfaßten Helligkeitsverteilung dann vermieden werden, wenn der Einfluß von Leuchteffekten auf die Messung von der Mitte zum Rand des Helligkeitsmusters hin aufgrund der Form des Musters abnimmt. Dies ist durch Muster gewährleistet, bei denen mindestens eine Kante schräg zur Längserstreckungsrichtung der Maskenschlitze steht. Vorzugsweise ist das Muster ein auf einer Spitze stehendes Quadrat oder ein anderes Muster, bei dem alle Kanten schräg zu den Maskenschlitzen verlaufen. Wird ein solches Muster horizontal über den Schirm bewegt, und tritt ein Leuchtstoffstreifen neu in das Muster ein, oder tritt ein zuvor vorhandener aus dem Muster auf, wirkt sich dies kaum aus, da das Muster in diesen Außenbereichen nur über geringe Höhe verfügt. Außerdem wird der Einfluß eines Randstreifens durch die schräg verlaufende Musterkante mit zunehmender Verschiebung des Musters immer weiter abgeschwächt, bevor er schließlich aus dem Muster austritt. Beim herkömmlichen Muster ist dagegen ein Streifen entweder über seine volle Länge innerhalb des Musters vorhanden, oder er ist nicht im Muster enthalten.

Ein ganz besonderer Vorteil des erfindungsgemäßen Verfahrens und der erfindungsgemäßen Vorrichtung ist, daß sie so ausgebildet werden können, daß mit einer einzigen Messung die Konvergenzbeziehungen aller Elektronenstrahlen innerhalb einer Farbbildröhre sowohl in horizontaler wie auch in vertikaler Richtung erfaßt werden können.

### Zeichnung

Zur Erfindung:

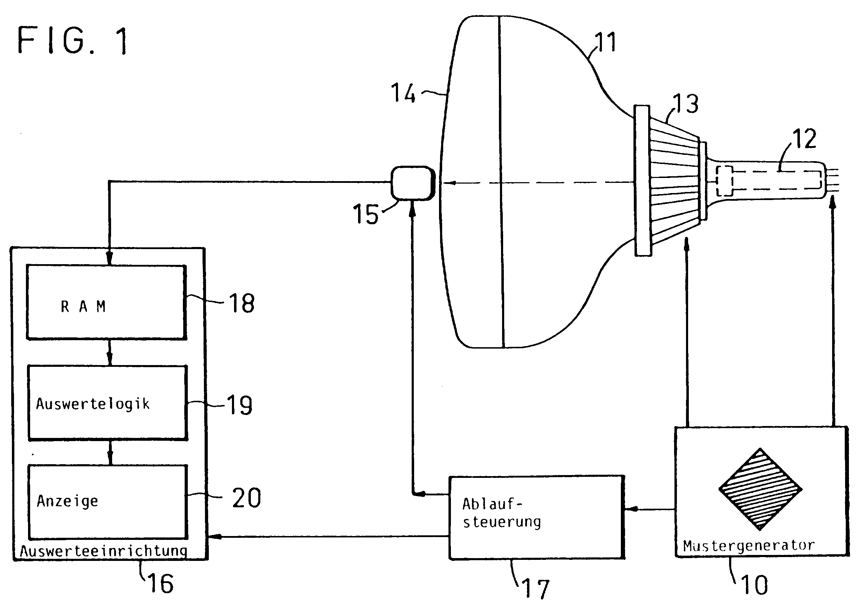

Fig. 1: schematische Darstellung einer Farbbildröhre und einer Vorrichtung zum Messen der Konvergenz und der Rasterlage von Elektronenstrahlen dieser Röhre;

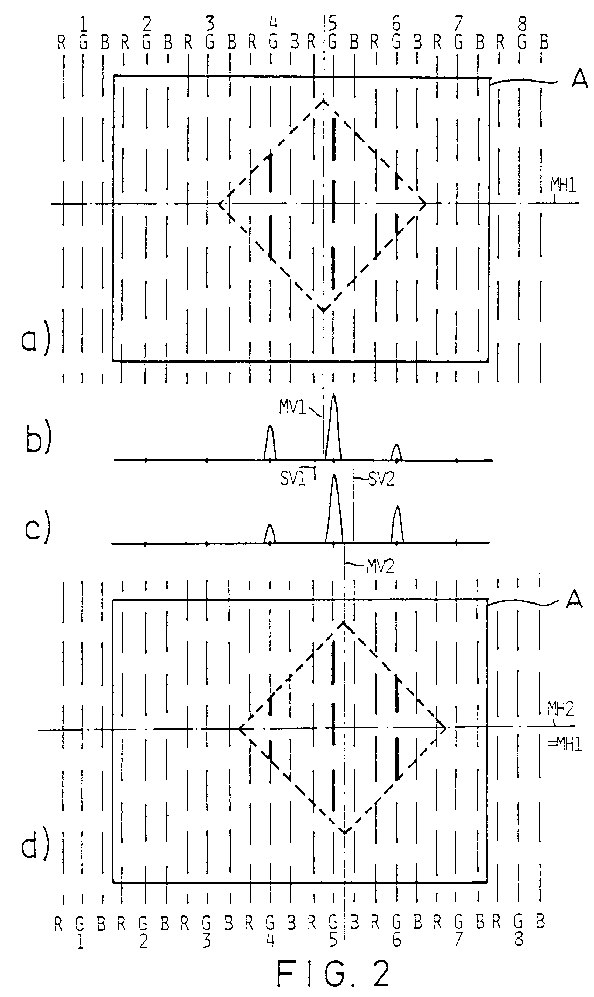

Fig. 2a: schematische Darstellung eines auf einer Spitze stehenden quadratischen Leuchtfleckmusters, wie es auf einen CCD-Bildwandler abgebildet wird;
Fig. 2b: Darstellung der Helligkeitsverteilung entlang einer horizontalen Linie des Bildwandlers;
Fig. 2c: Darstellung entsprechend der von Fig. 2b, jedoch für die Musterlage gemäß Fig. 2d;
Fig. 2d: Darstellung entsprechend der von Fig. 2a, jedoch für ein geringfügig nach rechts verschobenes Muster;

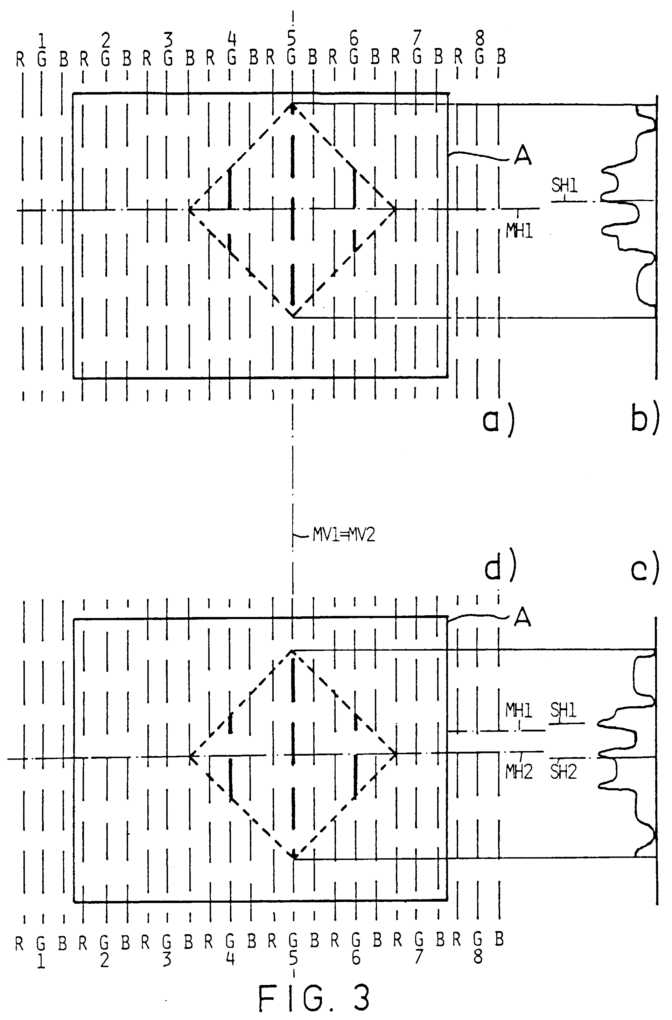

Fig. 3a: Darstellung entsprechend der von Fig. 2a, jedoch für ein etwas nach rechts oben verschobenes Muster;
Fig. 3b: Darstellung entsprechend der von Fig. 2b, jedoch für die Helligkeitsverteilung in vertikaler Richtung;
Fig. 3c: Darstellung entsprechend der von Fig. 3b, jedoch für die Musterlage gemäß Fig. 3d;
Fig. 3d: Darstellung entsprechend der von Fig. 3a, jedoch für ein gegenüber der Lage von Fig. 3a geringfügig nach unten verschobenes Muster;

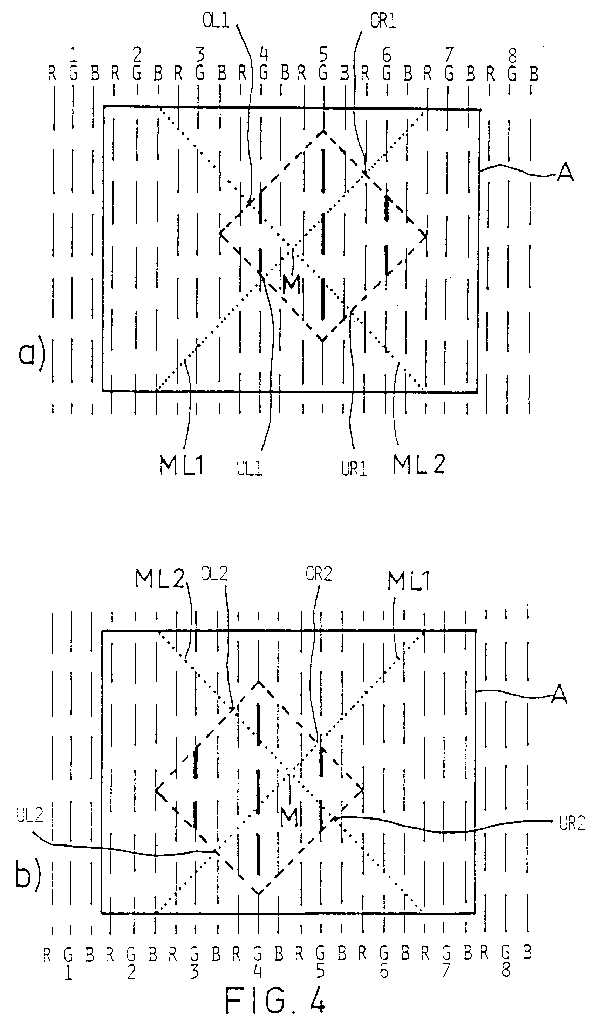

Fig. 4a: Darstellung eines Musters innerhalb des Gesichtsfeldes eines CCD-Wandlers, mit zusätzlich eingezeichneten rechtwinklig zueinander stehenden Linien, die parallel zu den Musterrändern verlaufen und mit deren Hilfe die Musterlage bestimmt wird;
Fig. 4b: Darstellung entsprechend der von Fig. 4a, jedoch für eine andere Musterlage;

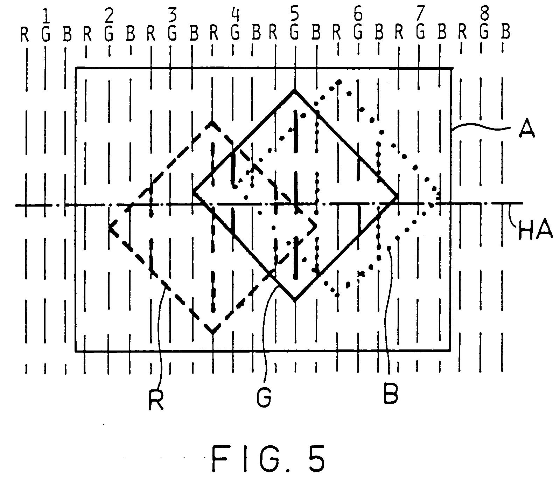

Fig. 5: Darstellung von 30 teilweise überlappenden Mustern im Gesichtsfeld eines Bildwandlers, wobei jedes Muster zu einem von drei verschiedenen Elektronenstrahlen gehört; und

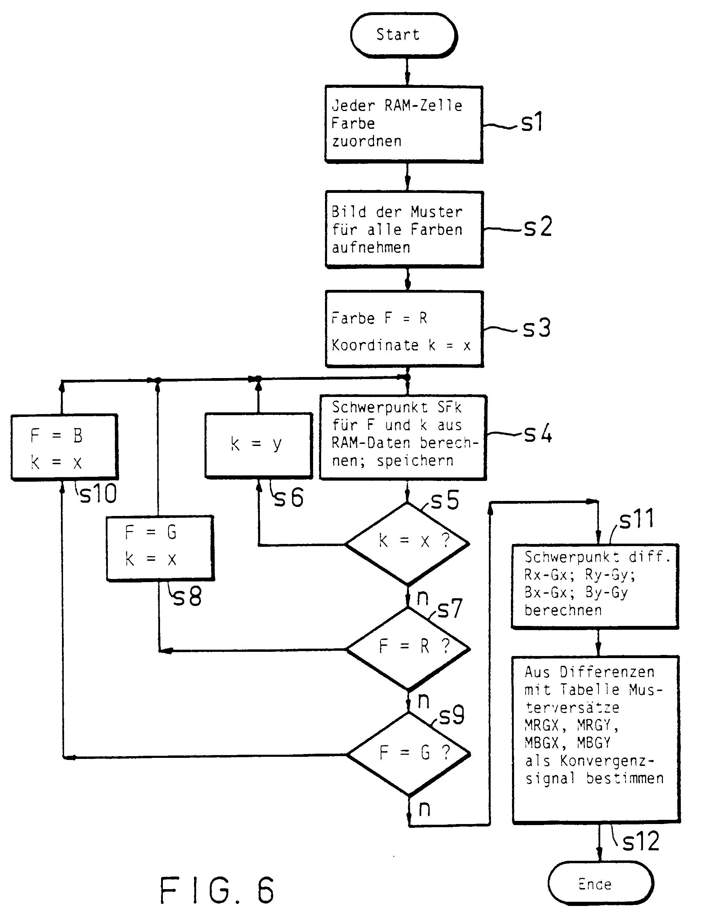

Fig. 6: Flußdiagramm zum Erläutern eines Verfahrens, wie es von der Vorrichtung gemäß Fig. 1 ausgeführt wird.

Zum Stand der Technik:
Fig. 7: Darstellung entsprechend der von Fig. 1, jedoch für die bereits erläuterte bekannte Vorrichtung;
Fig. 8: schematische Darstellung eines CCD-Bildwandlers und eines zugeordneten RAM in der Vorrichtung gemäß Fig. 7;
Fig. 9: Darstellung von Leuchtstoffstreifen und Leuchtflekken auf einem Bildschirm und von zugehörigen Helligkeitsmessungen;
Fig. 10a, b, c, d: Darstellungen entsprechend denen von Fig. 2a, b, c, d, jedoch unter Verwendung eines herkömmlichen Musters.

### Beschreibung von Ausführungsbeispielen

Die erfindungsgemäße Vorrichtung gemäß Fig. 1 ist im wesentlichen aufgebaut wie diejenige von Fig. 7, unterscheidet sich jedoch von dieser durch andere Funktionen des Mustergenerators, der Ablaufsteuerung und der Auswertelogik und damit auch der Auswerteeinrichtung, weswegen diese Funktionsgruppen nun die Bezugszeichen 10, 17, 19 und 16 statt 10', 17', 19' bzw. 16' tragen.

Wie aus Fig. 2a erkennbar, wird die Farbbildröhre 11 vom Mustergenerator 10 so angesteuert, daß sie ein Muster eines auf einer Spitze stehenden Quadrates erzeugt. Dieses Muster weist eine Kantenlänge von einigen Millimetern, z. B. 4 mm, auf, was aus entsprechenden Gründen der Fall, wie die Wahl einer Streifenbreite von einigen Millimetern bei den herkömmlich verwendeten Rasterstreifen. Mit dieser Größe paßt das Muster gut in das Gesichtsfeld A des CCD-Bildwandlers gemäß Fig. 8. Die zugehörige Helligkeitsverteilung in horizontaler Richtung ist in Fig. 2b aufgezeichnet. Erfolgt eine geringfügige Verschiebung nach rechts, werden die auf dem Leuchtstoffstreifen G6 erzeugten Leuchtflecke etwas länger, während die auf dem Streifen G4 erzeugten Flecke etwas kürzer werden. Würde noch weiter nach rechts verschoben werden, als dies in Fig. 2d dargestellt ist, würden die Leuchtflecke auf dem Streifen G4 noch weiter verkürzt werden, bis sie schließlich verschwinden würden. Es handelt sich dabei um ein allmähliches Verschwinden und nicht um ein schlagartiges Verschwinden wie im Fall der Verwendung des bekannten Musters, wie dies anhand von Fig. 10 beschrieben wurde. Entsprechend gilt, daß neue Leuchtflecke auf der rechten Seite nicht plötzlich in voller Länge auftreten würden, sondern es würden beim Erreichen eines neuen Leuchtstreifens zunächst kurze Leuchtflecke auftreten, die dann bei weiterem Verschieben nach rechts immer länger werden würden. Leuchtflecke können also nicht plötzlich über die gesamte Länge des Gesichtsfeldes des CCD-Bildwandlers auftreten. Diese sich allmählich ändernden Helligkeiten sind auch aus den Darstellungen der Helligkeitsverläufe der Fig. 2b und 2c erkennbar, die zu den Musterlagen gemäß Fig. 2a bzw. 2d gehören.

Die Fig. 3a bis d veranschaulichen entsprechend die Gegebenheiten beim Verschieben des auf einer Spitze stehenden quadratischen Musters nach unten. Wiederum werden Leuchtflecke immer mehr verkkeinert, bis sie schließlich abgeschnitten werden. Damit ergeben sich auch bei Verschiebungen in y-Richtung Änderungen der Helligkeitsverteilung ohne große Sprünge.

Fig. 4 veranschaulicht, daß zum Ausmessen der Verschiebung des Musters nicht notwendigerweise der Schwerpunkt der Helligkeitsverteilung verwendet werden muß. Gemäß Fig. 4 werden vielmehr in dem vom CCD-Bildwandler 21 erfaßten Bild zwei rechtwinklig zueinander stehende Meßlinien ML1 und ML2 aufgespannt, die parallel zu den Rändern des quadratischen Musters verlaufen. Bewegt man die Helligkeitsauswertung entlang der Meßlinie ML1 von unten nach oben und summiert alle Helligkeitswerte auf, die auf einer rechtwinklig zur Meßlinie ML1 verlaufenden Linie auftreten, stellt man im Punkt UL1 das untere Ende des Leuchtflecks auf dem Leuchtstoffstreifen G4 fest. Bei weiterem Fortschreiten werden bei der genannten Signalerfassung dauernd Helligkeitswerte erfaßt, bis schließlich der Punkt OR1 erreicht wird, in dem in Blickrichtung rechtwinklig zur Linie ML1 letztmalig ein zu einem Leuchtfleck gehöriges Pixel erkannt wird. Die Punkte UL1 und OR1 kennzeichnen den unteren linken bzw. den oberen rechten Rand des Musters. Entsprechend werden beim Fortschreiten auf der Meßlinie ML2 zwei Punkte UR1 und OL1 erfaßt, die den unteren rechten bzw. oberen linken Rand des Musters kennzeichnen. Wird nun das Muster verschoben, wie in Fig. 4b dargestellt, werden mit dem genannten Verfahren Meßpunkte UL2 und OR2 sowie UR2 und OL2 erfaßt. Damit liegen die Verschiebungen entlang der Meßlinien fest, welche Verschiebungen aufgrund ihrer 45°-Richtung zur x-Richtung leicht in x- und y-Verschiebungen umgerechnet werden können. Die genannten Auswertungen mit dem Fortschreiten in Richtung der Meßlinien und dem Aufsummieren aller Pixelwerte in jeweils einer Linie rechtwinklig zur Meßlinie lassen sich mit Hilfe des RAM 18 leicht dadurch bewerkstelligen, daß die Pseudoadressen in den genannten Richtungen berechnet werden und dann die RAM-Zellen unter den jeweiligen Pseudoadressen ausgelesen werden.

Auch bei der durch Fig. 4 veranschaulichten Auswertungsvariante ist zu beachten, daß Leuchtflecken allmählich in das Muster eintreten und allmählich aus diesem austreten, weswegen sich bei Verschieben des Musters nicht plötzliche sprunghafte Änderungen der Meßpunkte UL, UR, OR und OL ergeben.

Die Fig. 2 bis 4 dienten dazu, zu veranschaulichen, daß sich die jeweils gemessene Lage bei stetigem Verschieben des Musters auch stetig und nicht zum Teil sprunghaft ändert. Dies gilt auch dann, wenn nicht ein auf der Spitze stehendes Quadrat verwendet wird, sondern ein anderes Muster mit schräg zu den Maskenschlitzen stehenden Kanten, was gewährleistet, daß Leuchtflecke allmählich in das Muster eintreten und allmählich aus diesem austreten. Wesentlich für praktische Anwendungen ist, daß dieser stetige Zusammenhang zwischen tatsächlicher und festgestellter Verschiebung eine sehr genaue Lagemessung gewährleistet.

In der praktischen Anwendung ist vor allem in x-Richtung nicht die Lagemessung eines einzelnen Elektronenstrahls von Interesse, sondern die Bestimmung der gegenseitigen Lage mehrerer Elektronenstrahlen. Dies ist in Fig. 5 veranschaulicht. Jeder von drei Elektronenstrahlen in einer Farbbildröhre erzeugt das auf der Spitze stehende Quadratmuster. Das vom grünen Strahl geschriebene Muster ist dabei mit durchgezogenen Linie umrandet, und die zugehörigen Leuchtflecke sind mit durchgezogenen Strichen gekennzeichnet, das vom roten Strahl erzeugte Muster ist mit gestrichelten Linien umrandet, und die zugehörigen Leuchtflecke sind gestrichelt dargestellt, während schließlich das vom blauen Strahl erzeugte Muster gepunktet umrandet ist und die zugehörigen Leuchtflecke als punktierte Streifen eingezeichnet sind. Würden die drei Elektronenstrahlen konvergieren, würden die drei Muster im wesentlichen zusammenfallen. Dies ist jedoch nicht der Fall. Es ist daher von Interesse, den Versatz des roten und den Versatz des blauen Strahls jeweils gegen den grünen Strahl auszumessen. Hierzu müssen die drei Lagen der drei Muster jeweils für sich ausgewertet werden. Dies kann selbst unter Verwendung eines CCD-Sensors dadurch erfolgen, daß vor dem Aufnehmen des Musters gemäß Fig. 5 festgestellt wird, weiche CCD-Pixel zu welcher Farbe gehören. Dazu werden entweder in einem Vorbereitungsschritt die drei Elektronenstrahlen nacheinander betrieben, und es wird für jedes Pixel registriert, zu welcher Farbe er gehört, oder es werden alle Elektronenstrahlen gleichzeitig betrieben, wobei das H-förmige Muster von Leuchtstofftripeln gemäß Fig. 9 entsteht, das es aufgrund seiner Struktur ermöglicht, die Zuordnung der Pixel zu den Farben vorzunehmen. Beide Vorgehensweisen sind von dem im Handel befindlichen Gerät gemäß Fig. 7 bekannt.

Beim Messen der Rasterabweichung in vertikaler Richtung muß zumindest für einen Strahl, z. B. den grünen Strahl, die Abweichung in y-Richtung von der horizontalen Mittellinie HA des Gesichtsfeldes des Bildwandlers erfaßt werden. Was die vertikalen Abweichungen der anderen Strahlen betrifft, kann dann entweder auf den grünen Strahl oder auch auf die horizontale Linie HA Bezug genommen werden. Diese Auswertung in vertikaler Richtung kann z. B. erfolgen, wie durch Fig. 3 veranschaulicht.

Mit der erfindungsgemäßen Vorrichtung lassen sich somit mit einer einzigen Aufnahme alle Konvergenz- und Rasterlagendaten für die x- und die y-Richtung für alle drei Elektronenstrahlen mit hoher Genauigkeit bestimmen. Einzige Voraussetzung ist neben der genannten Auswahl des Musters diejenige, daß das Gesichtsfeld A des CCD-Bildwandlers so eingestellt wird, daß im Fall gegeneinander versetzter Muster, wie in Fig. 5 dargestellt, alle Muster auch bei ganzer Ausschöpfung der Fertigungstoleranz noch innerhalb des Gesichtsfeldes liegen. Bei Verwendung eines CCD-Bildwandlers 21 gemäß Fig. 8 und bei Verwendung von quadratischen Mustern einer Kantenlänge von etwa 4 mm ist dies bei einer Abbildung im Verhältnis 1:1 möglich. Werden CCD-Bildwandler mit kleineren Abmessungen verwendet, oder sind Röhren mit außerordentlich hohen Konvergenz- und Rasterversätzen auszumessen, ist es erforderlich, das von der Kamera aufgenommene Bild der Muster etwas auf den CCD-Bildwandler zu verkleinern.

Das Flußdiagramm gemäß Fig. 6 veranschaulicht, wie die vorstehend genannten Verfahrensabläufe in der Vorrichtung gemäß Fig. 1 aufeinanderfolgen. In einem Schritt s1 wird jedem CCD-Pixel und damit auch jeder zugehörigen RAM-Zelle die richtige Farbe mit einem der oben genannten Verfahren zugeordnet. Anschließend werden in einem Schritt s2 die drei Muster für die drei Farben dargestellt, wobei sich z. B. ein Bild ergibt, wie es in Fig. 5 dargestellt ist. In einem Schritt s3 wird als erste zu untersuchende Farbe F die Farbe Rot R eingestellt, und als Koordinate k wird die x-Richtung ausgewählt. Mit diesen Daten wird der Schwerpunkt SFk für die Farbe R und die Koordinate x aus den RAM-Daten berechnet, wie anhand von Fig. 2 erläutert. Der errechnete Wert wird abgespeichert (Schritt s4). Anschließend (Schritt s5) wird untersucht, ob die Koordinate den Wert x aufweist. Ist dies der Fall, wird ein Schritt s6 erreicht, in dem die Koordinate auf den Wert y gestellt wird. Nun wird Schritt s4 erneut ausgeführt, es wird also der Schwerpunkt SFk für die Farbe R und die Koordinate y aus den RAM-Daten bestimmt, wie anhand von Fig. 3 veranschaulicht. Der errechnete Wert wird abgespeichert. Statt der eben beschriebenen Vorgehensweise können die x- und die y-Koordinate für den Schwerpunkt für das Muster für die Farbe Rot auch mit dem anhand von Fig. 4 erläuterten Verfahren bestimmt werden.

Ergibt sich in Schritt s5, daß die Koordinate nicht x ist, wird in einem Schritt s7 abgefragt, ob die Farbe R ist. Da dies beim Beispiel aktuell der Fall ist, wird ein Schritt s8 erreicht, bei dem die Koordinate k wieder auf den Wert x rückgesetzt wird und die Farbe auf den Wert G gestellt wird. Es erfolgt dann die Schwerpunktbestimmung für das Muster G entsprechend, wie für das Muster R beschrieben. Wird danach erneut Schritt s7 erreicht, ergibt sich, daß nun die Farbe nicht R ist, weswegen ein Schritt s9 erreicht wird, in dem untersucht wird, ob die Farbe grün ist. Da dies der Fall ist, wird ein Schritt s10 erreicht, in dem die Koordinate k wieder auf den Wert x rückgestellt wird und als Farbe die Farbe G ausgewählt wird. Auch hier erfolgt nun die Schwerpunktsbestimmung in der vorstehend genannten Weise. Bei erneutem Erreichen des Schrittes s9 ergibt sich, daß nun die Farbe nicht grün ist, weswegen ein Schritt s11 folgt, in dem die Schwerpunktsdifferenzen der Schwerpunkte für das rote und das blaue Muster zum Schwerpunkt für das grüne Muster gebildet werden. Da die Differenzen zwischen den Schwerpunkten der Helligkeitsverteilungen nicht exakt den Differenzen zwischen den tatsächlichen Musterschwerpunkten entsprechen, werden in einem Schritt s12 die Differenzen zwischen den Koordinaten der Schwerpunkte der Helligkeitsverteilungsmuster in Differenzen zwischen den Koordinaten der tatsächlichen Muster umgerechnet.

Das Verwenden eines Bildausschnittes mit schräg zur Schlitzrichtung verlaufender Kante, insbesondere das Verwenden eines Bildausschnittes in Form eines auf einer Spitze stehenden Quadrates ist in anderem Zusammenhang aus DE-A-32 06 913 bekannt. Gemäß dem dort beschriebenen Verfahren wird jedoch nicht ein Muster dieser Form erzeugt, sondern man läßt vertikale oder horizontale Rasterlinien an einer Blende mit diesem Muster vorbeilaufen. Handelt es sich um vertikale Linien und besteht ein Konvergenzfehler in horizontaler Richtung, laufen die Rasterlinien nicht gleichzeitig in die Blende ein und aus dieser heraus, sondern diese Vorgänge erfolgen nacheinander. Das Verwenden der Blende der genannten Form führt zu Signalen mit ansteigender Amplitude. Daraus wird ein zeitlicher Versatz für die Amplitude extrapoliert. Dieser Wert gibt ziemlich genau den Konvergenzversatz an. Die Erkenntnisse, zu denen die Blende der genannten Form bei der genannten Vorrichtung verwendet wird, sind jedoch im vorliegenden Fall nicht nutzbar, da hier keine zeitlichen Verläufe untersucht werden, sondern ein einziges Bild des besonderen Musters aufgenommen wird, welches Bild dann ausgewertet wird.

## Patentansprüche

1. Verfahren zum Messen der Lage eines Elektronenstrahls einer Mehrstrahl-Farbbildröhre relativ zum Gesichtsfeld eines Bildwandlers, welcher Elektronenstrahl ein Helligkeitsverteilungsmuster auf dem Bildschirm der Röhre erzeugt, wobei der Bildschirm Leuchtstoffstreifen für unterschiedliche Farben aufweist, und vor ihm eine Schattenmaske mit langgestreckten Schlitzen in Richtung der Leuchtstoffstreifen vorhanden ist, welches Verfahren folgende Schritte aufweist:
- Erzeugen eines vorgegebenen Elektronenverteilungsmusters auf der Schattenmaske;
- Aufnehmen des zugehörigen Helligkeitsverteilungsmusters auf dem Bildschirm mit Hilfe des genannten Bildwandlers, der das Helligkeitsverteilungsmuster in ein elektrisches Ladungsmuster wandelt; und
- Auswerten des Ladungsmusters zum Gewinnen eines Wertes einer die Lage des Ladungsmusters innerhalb des Gesichtsfeldes des Bildwandlers charakterisierenden Größe;
**dadurch gekennzeichnet**, daß als Elektronenverteilungsmuster ein solches erzeugt wird, das Abmessungen im Bereich einiger weniger Millimeter aufweist und bei dem mindestens eine Kante schräg zur Längserstreckungsrichtung der Maskenschlitze steht, und daß das zugehörige Helligkeitsverteilungsmuster so auf dem Bildwandler abgebildet wird, daß es ganz in dessen Gesichtsfeld paßt.

2. Verfahren nach Anspruch 1, **dadurch gekennzeichnet**, daß alle Kanten des Elektronenverteilungsmusters schräg zur Längserstreckungsrichtung der Maskenschlitze stehen.

3. Verfahren nach einem der Ansprüche 1 oder 2, **dadurch gekennzeichnet**, daß die die Lage des Ladungsmusters innerhalb des Bildwandlers charakterisierende Größe der Ladungsschwerpunkt in einer vorgegebenen Richtung ist.

4. Verfahren nach einem der Ansprüche 1 oder 2, **dadurch gekennzeichnet**, daß die die Lage des Ladungsmusters innerhalb des Bildwandlers charakterisierende Größe die Lage einer rechtwinklig zu einer vorgegebenen Richtung verlaufenden Kante des Ladungsmusters ist, wobei in einem Bereich auf einer Seite der Kante im wesentlichen alle Einzelladungen unterhalb einer Schwelle und in einem Bereich auf der anderen Seite der Kante im wesentlichen alle Einzelladungen über der Schwelle liegen.

5. Verfahren nach einem der Ansprüche 1 bis 4, **dadurch gekennzeichnet**, daß zum Messen der gegenseitigen Lage mindestens zweier Elektronenstrahlen unter Ausnutzung der vorgenannten Muster wie folgt verfahren wird:
- es wird ein solcher Maßstab für die Abbildung der Helligkeitsverteilungsmuster auf dem Bildwandler gewählt, daß alle Helligkeitsverteilungsmuster ganz auf diesem abgebildet werden;
- für jedes Pixel des Bildwandlers wird festgestellt, von Leuchtstoff welcher Farbe es Licht empfängt;
- die Elektronenverteilungsmuster werden für alle auszumessenden Elektronenstrahlen gleichzeitig erzeugt, und vom Bildwandler wird das Bild der zugehörigen Helligkeitsverteilungsmuster aufgenommen; und
- mit Hilfe der Zuordnung der Pixel zu den verschiedenen Elektronenstrahlen erfolgt die genannte Auswertung des aufgenommenen Bildes für jeweils zwei Elektronenstrahlen in zwei rechtwinklig zueinander stehenden Richtungen.

6. Vorrichtung zum Messen der Lage eines Elektronenstrahls einer Mehrstrahl-Farbbildröhre (11) relativ zum Gesichtsfeld eines Bildwandlers (21), welcher Elektronenstrahl ein Helligkeitsverteilungsmuster auf dem Bildschirm (14) der Röhre erzeugt, wobei der Bildschirm Leuchtstoffstreifen für unterschiedliche Farben aufweist und vor ihm eine Schattenmaske mit langgestreckten Schlitzen in Richtung der Leuchtstoffstreifen vorhanden ist, mit
- einem Mustergenerator (10) zum Erzeugen eines vorgegebenen Elektronenverteilungsmusters auf der Schattenmaske;
- einer Bildwandlerkamera (15) zum Aufnehmen des zugehörigen Helligkeitsverteilungsmusters auf dem Bildschirm;
- dem genannten Bildwandler (21) zum Wandeln des von der Kamera aufgenommenen Helligkeitsverteilungsmusters in ein elektrisches Ladungsmuster;
- einer Auswerteeinrichtung (16) zum Auswerten des Ladungsmusters zum Gewinnen eines Wertes einer die Lage des Ladungsmusters innerhalb des Gesichtsfeldes des Bildwandlers charakterisierenden Größe; und
- einer Ablaufsteuerung (17) zum zeitlichen Steuern der Abläufe im Mustergenerator, im Bildwandler und in der Auswerteeinrichtung;
**dadurch gekennzeichnet**, daß
- der Mustergenerator ein Elektronenverteilungsmuster erzeugt, das Abmessungen im Bereich einiger weniger Millimeter aufweist und bei dem mindestens eine Kante schräg zur Längserstreckungsrichtung der Maskenschlitze steht; und daß
- das Helligkeitsverteilungsmuster so auf den Bildwandler abgebildet wird, daß es ganz in dessen Gesichtsfeld paßt.

## Claims

1. Method of measuring the position of an electron beam of a multibeam colour picture tube relative to the field of view of an image converter, which electron beam generates a brightness distribution pattern on the viewing screen of the tube, the viewing screen having phosphor strips for different colours and a shadow mask having elongated slots in the direction of the phosphor strips being present upstream of the viewing screen, which method comprises the following steps:
- generation of a specified electron distribution pattern on the shadow mask;
- registration of the associated brightness distribution pattern on the viewing screen with the aid of the said image converter, which converts the brightness distribution pattern into an electrical charge pattern; and
- evaluation of the charge pattern to obtain a value of a variable which characterizes the position of the charge pattern inside the field of view of the image converter; characterized in that the electron distribution pattern generated is one which has dimensions in the region of a few millimetres and in which at least one edge is inclined to the direction of longitudinal extension of the mask slots, and in that the associated brightness distribution pattern is imaged on the image converter in such a way that it completely fits into the field of view of the latter.

2. Method according to Claim 1, characterized in that all the edges of the electron distribution pattern are inclined to the direction of longitudinal extension of the mask slots.

3. Method according to one of Claims 1 or 2, characterized in that the variable which characterizes the position of the charge pattern inside the image converter is the centre of gravity of charge in a specified direction.

4. Method according to one of Claims 1 or 2, characterized in that the variable which characterizes the position of the charge pattern inside the image converter is the position of an edge of the charge pattern which extends at right angles to a specified direction, essentially all the individual charges in a region on one side of the edge being below a threshold and essentially all the individual charges in a region on the other side of the edge being above the threshold.

5. Method according to one of Claims 1 to 4, characterized in that the procedure for measuring the mutual position of at least two electron beams utilizing the abovementioned pattern is as follows:
- a scale is chosen for the imaging of the brightness distribution pattern on the image converter which is such that all the brightness distribution pattern is completely imaged on said image converter;
- for each pixel of the image converter, it is established which colour of phosphor it is receiving light from;
- the electron distribution patterns are generated simultaneously for all the electron beams to be measured and the image of the associated brightness distribution patterns is registered by the image converter; and
- the said evaluation of the image registered is performed for two electron beams in each case in two directions mutually disposed at right angles with the aid of the assignment of the pixels to the different electron beams.

6. Device for the measurement of the position of an electron beam of a multibeam colour picture tube (11) relative to the field of view of an image converter (21), which electron beam generates a brightness distribution pattern on the viewing screen (14) of the tube, the viewing screen having phosphor strips for different colours and a shadow mask having elongated slots in the direction of the phosphor strips being present upstream of the viewing screen, comprising
- a pattern generator (10) for generating a specified electron distribution pattern on the shadow mask;
- an image converter camera (15) for registering the associated brightness distribution pattern on the viewing screen;
- the said image converter (21) for converting the brightness distribution pattern registered by the camera into an electrical charge pattern;
- an evaluation device (16) for evaluating the charge pattern to obtain a value of a variable which characterizes the position of the charge pattern inside the field of view of the image converter; and
- a sequence controller (17) for controlling the sequences with respect to time in the pattern generator, in the image converter and in the evaluation device;
characterized in that
- the pattern generator generates an electron distribution pattern which has dimensions in the region of a few millimetres and in which at least one edge is at an angle to the direction of longitudinal extension of the mask slots; and in that
- the brightness distribution pattern is imaged on the image converter in such a way that it fits completely into the field of view of the latter.

## Revendications

1. Procédé pour mesurer la position d'un faisceau électronique d'un tube image en couleurs à plusieurs faisceaux par rapport au champ optique d'un convertisseur d'image, lequel faisceau électronique produit un motif de répartition de luminosité sur l'écran du tube, l'écran comportant des bandes luminescentes pour différentes couleurs et un masque d'ombre pourvu de fentes allongées dans la direction des bandes luminescentes étant disposé devant l'écran, lequel procédé comprend les étapes suivantes :
- production d'un motif prédéterminé de répartition d'électrons sur le masque d'ombre,
- enregistrement du motif de répartition de luminosité correspondante sur l'écran à l'aide du convertisseur d'image mentionné qui convertit le motif de répartition de luminosité en un motif de charges électriques, et
- analyse du motif de charges pour obtenir une valeur d'une grandeur caractérisant la position du motif de charges à l'intérieur du champ optique ou convertisseur d'image,
caractérisé par le fait que le motif de répartition d'électrons produit a des dimensions de l'ordre de quelques millimètres et au moins un bord qui s'étend en biais par rapport à la direction longitudinale des fentes du masque et que le motif de répartition de luminosité correspondant est reproduit sur le convertisseur d'image de telle manière qu'il entre complètement dans le champ optique de ce dernier.

2. Procédé selon la revendication 1, caractérisé par le fait que tous les bords du motif de répartition des électrons s'étendent en biais par rapport à la direction longitudinale des fentes du masque.

3. Procédé selon l'une des revendications 1 ou 2, caractérisé par le fait que la grandeur caractérisant la position du motif de charges à l'intérieur du convertisseur d'image est le barycentre des charges dans une direction prédéterminée.

4. Procédé selon l'une des revendications 1 ou 2, caractérisé par le fait que la grandeur caractérisant la position du motif de charges à l'intérieur du convertisseur d'image est la position d'un bord du motif de charges qui s'étend perpendiculairement à une direction prédéterminée, sensiblement toutes les charges individuelles étant inférieures à un seuil dans une zone située sur un côté du bord et sensiblement toutes les charges individuelles étant supérieures au seuil dans une zone située sur l'autre côté du bord.

5. Procédé selon l'une des revendications 1 à 4, caractérisé par le fait que pour mesurer la position réciproque d'au moins deux faisceaux électroniques en utilisant le motif mentionné précédemment, on procède de la manière suivante :
- on choisit pour la reproduction du motif de répartition de luminosité sur le convertisseur d'image une échelle telle que tous les motifs de reproduction de luminosité sont reproduits complètement sur ledit convertisseur,
- on détermine pour chaque pixel du convertisseur d'image la couleur de la substance luminescente dont il reçoit de la lumière,
- les motifs de répartition d'électrons sont produits en même temps pour tous les faisceaux électroniques à mesurer et le convertisseur d'image prend une vue des motifs correspondants de répartition de luminosité, et
- à l'aide de la répartition des pixels entre les différents faisceaux électroniques, on effectue l'analyse mentionnée de la vue prise pour respectivement deux faisceaux électroniques dans deux directions perpendiculaires entre elles.

6. Dispositif pour mesurer la position d'un faisceau électronique d'un tube image en couleurs à plusieurs faisceaux (11) par rapport au champ optique d'un convertisseur d'image (21), lequel faisceau électronique produit un motif de répartition de luminosité sur l'écran (14) du tube, l'écran comportant des bandes luminescentes pour différentes couleurs et un masque d'ombre pourvu de fentes allongées dans la direction des bandes luminescentes étant disposé devant l'écran, comprenant :
- un générateur de motifs (10) destiné à produire un motif prédéterminé de répartition d'électrons sur le masque d'ombre,
- une caméra à convertisseur d'image (15) destinée à enregistrer le motif correspondant de répartition de luminosité sur l'écran,
- le convertisseur d'image (21) mentionné pour convertir le motif de répartition de luminosité enregistré par la caméra en un motif de charges électriques,
- un dispositif d'analyse (16) pour analyser le motif de charges afin d'obtenir une valeur d'une grandeur caractérisant la position du motif de charges à l'intérieur du champ optique du convertisseur d'image, et
- une commande séquentielle (17) pour commander dans le temps les séquences dans le générateur de motifs, dans le convertisseur d'image et dans le dispositif d'analyse,
caractérisé par le fait que :
- le générateur de motifs produit un motif de répartition d'électrons qui a des dimensions de l'ordre de quelques millimètres et dont au moins un bord s'étend en biais par rapport à la direction longitudinale des fentes du masque, et que
- le motif de répartition de luminosité est reproduit sur le convertisseur d'image de telle manière qu'il entre complètement dans le champ optique de ce dernier.
